# EUROPEAN PATENT APPLICATION

(11) **EP 2 955 831 A1**
(43) Date of publication of application: **16.12.2015**
(21) Application number: 14749647.5
(22) Date of filing: 06.02.2014
(51) Int. Cl.: H02M 3/155, H02M 3/28, H02M 7/21

(54) **DC-DC CONVERTER**

(30) Priority: 08.02.2013 JP 2013022977
(71) Applicant: Murata Manufacturing Co., Ltd., Nagaokakyo-shi, Kyoto 617-8555 (JP)
(72) Inventor: KONISHI, Masanori, Nagaokakyo-shi Kyoto 617-8555 (JP); MOROMIZATO, Eito, Nagaokakyo-shi Kyoto 617-8555 (JP)
(74) Representative: Herrmann, Uwe
(86) International application number: PCT/JP2014/052714
(87) International publication number: WO 2014/123172

(57) **Abstract**

In a step-up DC-DC converter (101) that steps up a voltage input from a DC power supply (Vin) and provides a stepped-up voltage to a load (RL), a change in a current flowing through a switching device (Q1) is detected as a change in voltage. The detected voltage is superimposed on a detection signal of an output voltage (Vo) output to a load (RL), and the detection signal after superimposition is input to an error amplifier (11). On the basis of a result of a comparison with a reference voltage (Vref) performed in the error amplifier (11), a PWM modulation signal is generated in a comparator (12), switching devices (Q1 and Q2) are driven by a driver (10), and a current-voltage characteristic is made to be inclined. As a result, provided is a DC-DC converter in which a current-voltage characteristic can be made to be inclined without causing a loss to be generated.

## Description

### Technical Field

The present invention relates to a DC-DC converter in which the current-voltage characteristic has a predetermined slope.

### Background Art

There exists a power supply apparatus that is formed of a plurality of power supplies connected in parallel to output high power. In the case where a plurality of power supplies are used, various methods have been proposed for distributing loads on the power supplies, thereby leveling the loads on the power supplies. For example, Patent Document 1 discloses a parallel-driven power supply apparatus that is formed of a plurality of power supplies connected in parallel.

The parallel-driven power supply apparatus disclosed in Patent Document 1 includes two DC-DC converters. In Patent Document 1, a resistor is inserted on the output side of each DC-DC converter, whereby a slope is given to each current-voltage characteristic (characteristic indicating a change in voltage supplied to a load corresponding to a change in load current) of the DC-DC converters, and further, the slopes are made to be the same. In this configuration, only one of the DC-DC converters having a high output voltage outputs a current when an output current output to a load that is connected to the parallel-driven power supply apparatus is low, and both of the DC-DC converters output currents when the output current output to the load increases. In this manner, the load is distributed between the two DC-DC converters.

### Citation List

### Patent Document

Patent Document 1: Japanese Unexamined Patent Application Publication No. 2005-168090

### Summary of Invention

### Technical Problem

However, in Patent Document 1, since a resistor is placed in the path of a load current of each DC-DC converter, there is a problem in that a loss due to each resistor is generated, resulting in a decrease in conversion efficiency.

Hence, it is an object of the present invention to provide a DC-DC converter that allows a slope to be given to a current-voltage characteristic without causing a loss to be generated.

### Solution to Problem

The present invention provides a DC-DC converter that includes: a switching circuit that performs switching of a voltage and current input to a DC power supply input unit; a smoothing circuit that smoothes the voltage and current switched by the switching circuit; and a switching control circuit that performs feedback control of the switching circuit on a basis of a comparison between an output voltage output from the smoothing circuit and a reference voltage in such a manner that the output voltage output from the smoothing circuit is stabilized, the DC-DC converter including: a switching current detection circuit that detects a change in a current flowing through the switching circuit as a change in voltage; and an output voltage detection signal control circuit that superimposes an output voltage of the switching current detection circuit on the output voltage output from the smoothing circuit.

With this configuration, when an output current output to a load from the smoothing circuit increases, the output voltage of the switching current detection circuit superimposed on the output voltage output from the smoothing circuit increases. Hence, an error (comparison) between the output voltage output from the smoothing circuit and the reference voltage changes, and, for example, feedback control of the switching circuit is performed in such a manner as to lower the output voltage in accordance with an increase in the output current output to the load. As a result, without using a resistor for a voltage drop in a current path through which a current always flows, that is, without a loss being generated due to the resistor, a current-voltage characteristic can be made to be inclined.

The output voltage detection signal control circuit may have a configuration including a capacitor that charges an output voltage of the switching current detection circuit; and a switching device that switches on and off charging of the capacitor in synchronization with on and off operations of the switching circuit.

With this configuration, by making a current-voltage characteristic be inclined utilizing the peak voltage of a voltage switched by the switching circuit, the current-voltage characteristic can be made to have a larger slope.

The present invention provides a DC-DC converter that includes: a switching circuit that performs switching of a voltage and current input to a DC power supply input unit; a smoothing circuit that smoothes the voltage and current switched by the switching circuit; and a switching control circuit that performs feedback control of the switching circuit on the basis of a comparison between an output voltage output from the smoothing circuit and a reference voltage in such a manner that the output voltage output from the smoothing circuit is stabilized. The switching control circuit includes: an error amplifier that amplifies an error between the output voltage output from the smoothing circuit and the reference voltage; and a PWM modulation circuit that generates a PWM modulation signal on a basis of an output of the error amplifier and a triangular wave signal. The DC-DC converter includes: a switching current detection circuit that detects a change in a current flowing through the switching circuit as a change in voltage; and a reference voltage control circuit that controls the reference voltage by using an output voltage of the switching current detection circuit.

With this configuration, the output voltage of the switching current detection circuit changes in accordance with a change in output current output to a load from the smoothing circuit, and the reference voltage is controlled by using the changing output voltage. Hence, an error between the output voltage output from the smoothing circuit and the reference voltage changes, whereby the output voltage output from the error amplifier also changes. The PWM modulation circuit, for example, generates a PWM modulation signal in such a manner as to lower the output voltage in accordance with an increase in the output current output to the load. As a result, without using a resistor for a voltage drop in a current path through which a current always flows, that is, without a loss being generated due to the resistor, a current-voltage characteristic can be made to be inclined.

A configuration may be employed in which the switching current detection circuit includes a current mirror circuit that detects the current flowing through the switching circuit, and the output voltage detection signal control circuit includes a resistor voltage divider circuit that divides the output voltage output from the smoothing circuit and superimposes an output side current of the current mirror circuit.

With this configuration, even when a current flowing through the switching circuit is low, the current-voltage characteristic can be made to be inclined by using a current mirror circuit that amplifies the current.

A configuration may be employed in which the DC-DC converter includes: an isolated transformer including a primary winding and a secondary winding, where the primary winding is connected to a switching device that performs switching of a current flowing through the primary winding, and the secondary winding is connected to a synchronous switching device that performs synchronous rectification for a voltage and current induced in the secondary winding, and where the switching current detection circuit detects a current flowing through the switching device.

With this configuration, a current-voltage characteristic which is inclined can be generated also in an isolated DC-DC converter without causing a loss to be generated.

A configuration may be employed in which a switching device is provided in an output unit of the switching current detection circuit.

With this configuration, usual feedback control can be performed in the case where the current-voltage characteristic need not be inclined.

### Advantageous Effects of Invention

According to the present invention, a current-voltage characteristic can be made to have a slope, without generation of a loss due to a resistor.

### Brief Description of Drawings

[Fig. 1] Fig. 1 is a circuit diagram of a DC-DC converter according to a first embodiment.
[Fig. 2] Fig. 2 is a diagram illustrating a current-voltage characteristic.
[Fig. 3] Fig. 3 is a diagram illustrating the current-voltage characteristics of two DC-DC converters driven in parallel.
[Fig. 4] Fig. 4 is a circuit diagram of a DC-DC converter according to a second embodiment.
[Fig. 5] Fig. 5 is a diagram illustrating a DC current detection circuit of a DC-DC converter according to a third embodiment.
[Fig. 6] Fig. 6 is a diagram illustrating a DC current detection circuit of a DC-DC converter according to the third embodiment.
[Fig. 7] Fig. 7 is a diagram illustrating a DC current detection circuit of a DC-DC converter according to the third embodiment.
[Fig. 8] Fig. 8 is a circuit diagram of a DC-DC converter according to a fourth embodiment.
[Fig. 9] Fig. 9 is a circuit diagram of a DC-DC converter according to a fifth embodiment.
[Fig. 10] Fig. 10 is a circuit diagram of a DC-DC converter according to a sixth embodiment.
[Fig. 11] Fig. 11 is a circuit diagram of a DC-DC converter according to a seventh embodiment.

### Description of Embodiments

In a first embodiment, an example will be described in which a DC-DC converter according to the present invention is made to be a step-up converter that steps up an input DC voltage, and the current-voltage characteristic of the DC-DC converter is made to have a slope.

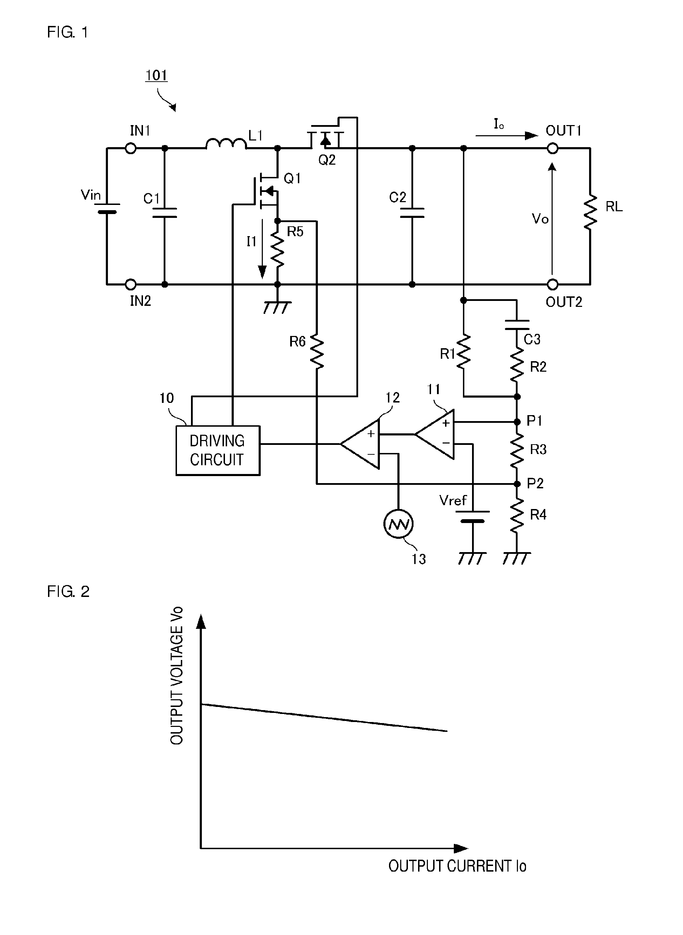

Fig. 1 is a circuit diagram of a DC-DC converter 101 according to the first embodiment. The DC-DC converter 101 according to the first embodiment includes input terminals IN1 and IN2 to which a DC power supply Vin is connected, output terminals OUT1 and OUT2 to which a load RL is connected. The DC-DC converter 101 steps up a DC voltage input at the input terminals IN1 and IN2 and outputs the stepped-up DC voltage to the load RL through the output terminals OUT1 and OUT2.

Hereinafter, the output voltage applied to the load RL from the output terminals OUT1 and OUT2 is denoted by Vo and the output current is denoted by Io.

An input capacitor C1 is connected between the input terminals IN1 and IN2. An inductor L1, a switching device Q1, and a resistor R5 for current detection are connected in series between the input terminals IN1 and IN2. The switching device Q1, the gate of which is connected to a driving circuit 10, is switched on and off as a result of a control signal being input from the driving circuit 10. Hereinafter, a current flowing through the resistor R5 when the switching device Q1 is on is denoted by I1.

The above-described inductor L1 and a switching device Q2 are connected in series between the input terminal IN1 and the output terminal OUT1. Note that a diode may be connected instead of the switching device Q2. A smoothing capacitor C2 is connected between the output terminals OUT1 and OUT2.

In this configuration, as a result of the switching devices Q1 and Q2 being alternately switched on and off, an input DC voltage input at the input terminals IN1 and IN2 is stepped up and the stepped-up DC voltage is output from the output terminals OUT1 and OUT2 to the load RL.

Note that the switching devices Q1 and Q2 described above correspond to the switching circuit of the present invention, and the inductor L1 and the smoothing capacitor C2 correspond to the smoothing circuit of the present invention.

Voltage divider resistors R1, R3, and R4 are connected between the output terminals OUT1 and OUT2. A phase compensation circuit formed of a capacitor C3 and a resistor R2 is connected in parallel with the resistor R1. Hereinafter, a connection node between the resistors R1 and R3 is denoted by P1, and a connection node between the resistors R3 and R4 is denoted by P2. The resistors R1 and R2 and the capacitor C3 form an example of the "output voltage detection signal control circuit" according to the present invention.

The connection node P1 is connected to the non-inverting terminal (+) of an error amplifier 11 and a reference voltage Vref is input to the inverting terminal (-) of the error amplifier 11. An error between voltages input to these terminals is amplified by the error amplifier 11 and output to the non-inverting input terminal (+) of a comparator 12. The inverting terminal (-) of the comparator 12 is connected to a triangular-wave oscillator 13. The comparator 12 compares the output voltage output from the error amplifier 11 and the output voltage output from the triangular-wave oscillator 13 and generates a PWM modulation signal having a duty cycle corresponding to the comparison result. The driving circuit 10 drives the switching devices Q1 and Q2 on the basis of the PWM modulation signal generated by the comparator 12. Feedback control is performed by the operations of the error amplifier 11, the comparator 12, and the driving circuit 10.

In this circuit, in the case of a configuration in which the resistor R5 and a resistor R6 are not provided, the non-inverting input terminal (+) of the error amplifier 11 receives only a detection voltage determined by the voltage divider resistors R1, R3, and R4, and an output voltage which is a voltage obtained by amplifying an error compared with the reference voltage Vref is output from the error amplifier 11. Hence, when the output current Io supplied to the load RL increases, feedback control is performed in such a manner that the corresponding output voltage Vo is output, whereby the output voltage is stabilized.

On the other hand, by providing the resistors R5 and R6, a voltage which is the detection voltage determined by the resistors R1, R3, and R4 on which the output voltage of the switching device Q1 during an on period has been superimposed is input to the non-inverting input terminal (+) of the error amplifier 11. Specifically, when the switching device Q1 is switched on, the current I1 flows through the resistor R5, whereby a voltage drop is generated in the resistor R5. At this time, the potential of one end of the resistor R5 on the switching device Q1 side becomes (+), whereby a current flows through the resistors R6 and R4 to the ground. As a result, the potentials of the connection nodes P2 and P1 increase, and a voltage which is the detection voltage determined by the resistors R1, R3, and R4 on which the output voltage of the switching device Q1 during an on period has been superimposed is input to the non-inverting input terminal (+) of the error amplifier 11.

In this case, compared with the configuration in which the resistors R5 and R6 are not provided, the error with respect to the reference voltage Vref increases and the output voltage of the error amplifier 11 increases. The comparator 12 generates a PWM modulation signal corresponding a duty cycle in accordance with the output voltage of the error amplifier 11. As the output voltage of the error amplifier 11 increases, the comparator 12 generates a PWM modulation signal with a small duty cycle. The driving circuit 10 performs switching control of the switching devices Q1 and Q2 in accordance with the generated PWM modulation signal. When switching control of the switching device Q1 is performed on the basis of a PWM modulation signal with a small duty cycle, the output voltage Vo decreases.

When the output current Io output to the load RL increases, the current I1 increases accordingly, whereby the voltage drop across the resistor R5 increases. The potentials of the connection nodes P2 and P1 further increase accordingly, whereby the error with respect to the reference voltage Vref further increases. As a result, the output voltage of the error amplifier 11 further increases, whereby the comparator 12 generates a PWM modulation signal with a smaller duty cycle. In other words, in accordance with an increase in the current I1 due to an increase in the output current Io output to the load RL, a PWM modulation signal with a smaller duty cycle is generated compared with the case in which the resistors R5 and R6 are not provided, whereby the output voltage Vo output from the output terminals OUT1 and OUT2 decreases.

Fig. 2 is a diagram illustrating a current-voltage characteristic and illustrates the output voltage Vo-output current Io characteristic. As described above, a PWM modulation signal is generated in such a manner that the higher the current Io, the lower the output voltage Vo. Hence, as illustrated in Fig. 2, the current-voltage characteristic is inclined in such a manner that the output voltage Vo decreases as the output current Io increases.

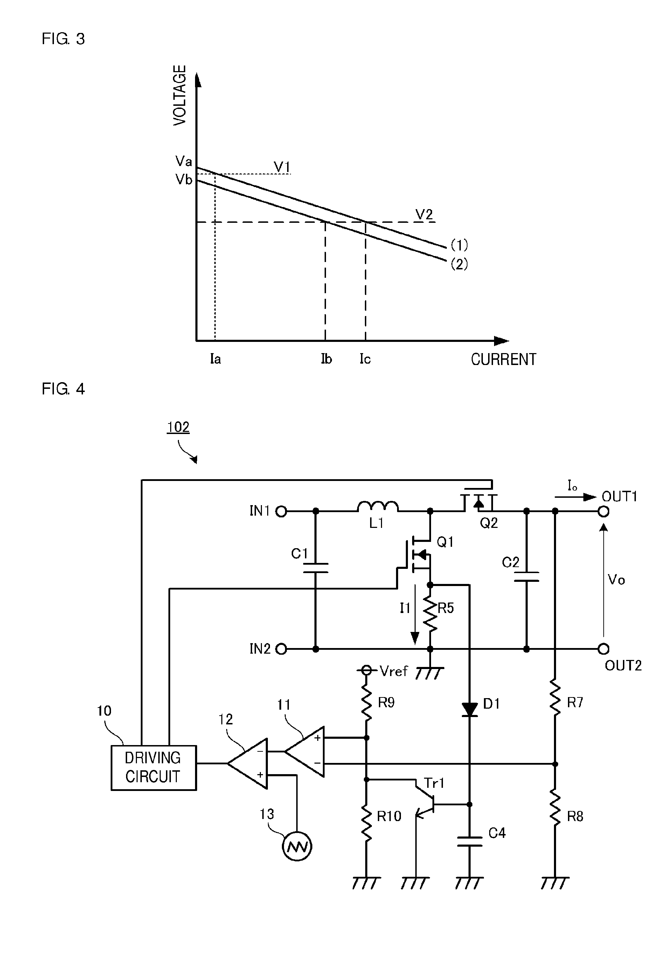

By making the current-voltage characteristic be inclined, in the case where, for example, two DC-DC converters are driven in parallel, respective loads placed on the two DC-DC converters can be distributed. Fig. 3 is a diagram illustrating the current-voltage characteristics of two DC-DC converters. Referring to Fig. 3, the current-voltage characteristics of the two DC-DC converters are made to be inclined. As indicated by the characteristic (1) of Fig. 3, the first DC-DC converter has a current-voltage characteristic in which the output voltage decreases as the load increases, with an output voltage Va at the time of no load as a starting point. As indicated by the characteristic (2) of Fig. 3, the second DC-DC converter has a current-voltage characteristic in which the output voltage decreases as the load increases, with an output voltage Vb (< Va) at the time of no load as a starting point.

In this case, where two DC-DC converters are driven in parallel, only the first DC-DC converter outputs a voltage V1 when an output current output to a load is low (at an output current Ia). In other words, the load is placed on only the first DC-DC converter. When the output current output to the load increases (at an output current Ib), each of the first DC-DC converter and the second DC-DC converter outputs a voltage V2. At this time, the first DC-DC converter outputs an output current Ic and the second DC-DC converter outputs the output current Ib. In other words, a load is placed on each of the first and second DC-DC converters, and an output current Ib + Ic is output.

In this manner, as a result of the current-voltage characteristic of the DC-DC converter 101 illustrated in Fig. 1 having a slope as illustrated in Fig. 2, the output voltage Vo decreases as the output current Io output to the load RL increases. Hence, a load on the DC-DC converter 101 at the time of parallel driving is alleviated. Further, in the present embodiment, the resistor R5 for current detection used to perform feedback control is generally used for over-current detection and, hence, there is no need for an additional special element for realizing a slope. Accordingly, the current-voltage characteristic can be made to be inclined without causing a loss to be generated, since a resistor for a voltage drop is not provided on a current path to the load RL through which a current always flows.

### (Second embodiment)

Fig. 4 is a circuit diagram of a DC-DC converter 102 according to a second embodiment. In Fig. 4, the load RL and the DC power supply Vin illustrated in Fig. 1 have been omitted. In the DC-DC converter 102 according to the second embodiment, a circuit configuration generating a PWM modulation signal is different from that in the first embodiment. Hereinafter, differences from the first embodiment will be described, while components which are the same as those in the first embodiment are denoted by the same reference symbols and the descriptions thereof are omitted.

Voltage divider resistors R7 and R8 are connected between the output terminals OUT1 and OUT2. A connection node between the voltage divider resistors R7 and R8 is connected to the inverting input terminal (-) of the error amplifier 11.

The source of the switching device Q1 is connected to a capacitor C4 with a diode D1 interposed therebetween. The capacitor C4 is connected between the base and emitter of a transistor Tr1. The emitter of the transistor Tr1 is connected to the ground and the collector thereof is connected to a connection node between voltage divider resistors R9 and R10 connected to the reference voltage Vref. The connection node between the voltage divider resistors R9 and R10 is connected to the non-inverting input terminal (+) of the error amplifier 11.

In this configuration, when the switching device Q1 is switched on, a current I1 flows through the resistor R5, whereby a voltage is generated between the two ends of the resistor R5. At this time, the potential of one end of the resistor R5 on the switching device Q1 side becomes positive (+), and the capacitor C4 is charged through the diode D1. When the capacitor C4 is charged, the collector current of the transistor Tr1 is determined in accordance with the voltage across the capacitor C4.

In the case of a configuration in which the capacitor C4 and the transistor Tr1 are not provided, the reference voltage Vref which does not change is always input to the non-inverting input terminal (+) of the error amplifier 11. On the other hand, in the configuration in which the capacitor C4 and the transistor Tr1 are provided and the transistor Tr1 is switched on by charging the capacitor C4, a voltage input to the non-inverting input terminal (+) of the error amplifier 11 is lower than the reference voltage Vref. As a result, the error voltage input at the two terminals of the error amplifier 11 decreases and the output voltage of the error amplifier 11 decreases. Hence, the comparator 12 generates a PWM modulation signal having a small duty cycle compared with a configuration in which the capacitor C4 and the transistor Tr1 are not provided.

In this manner, the current-voltage characteristic of the DC-DC converter 102 illustrated in Fig. 4 is made to have a slope as illustrated in Fig. 2, similarly to the first embodiment. As a result, the output voltage Vo decreases as the output current Io output to the load RL increases. Hence, a load on the DC-DC converter 102 in the case of parallel driving is alleviated. Further, in the present embodiment, since a resistor for a voltage drop need not be provided on a current path to the load RL through which a current always flows, the current-voltage characteristic can be made to have a slope without causing a loss to be generated.

### (Third embodiment)

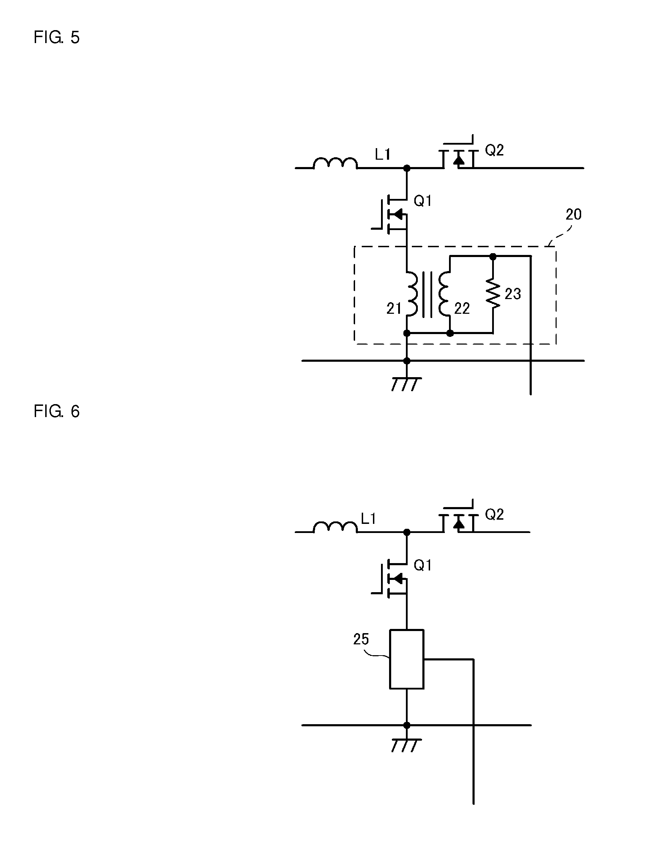

In a third embodiment, an example will be described in which instead of the resistor R5 for current detection described in the first and second embodiments, other circuits are provided. Fig. 5, Fig. 6, and Fig. 7 are diagrams illustrating current detection circuits of DC-DC converters according to the third embodiment. The circuits other than those illustrated in Fig. 5, Fig. 6, and Fig. 7 are the same as those in the first and second embodiments.

In Fig. 5, a current transformer 20 is connected to the source of the switching device Q1. Specifically, a primary winding 21 of the current transformer 20 is connected the source of the switching device Q1. A resistor 23 for current detection is connected to a secondary winding 22 of the current transformer 20. The resistor 23 is connected to the resistor R6 illustrated in Fig. 1 or the diode D1 illustrated in Fig. 4. Note that the current transformer 20 may be connected to the drain side of the switching device.

This configuration also allows the current-voltage characteristic of a DC-DC converter to have a slope as in the first and second embodiments. Further, the use of the current transformer 20 allows a large current to be supported, compared with the case in which the resistor R5 is used.

In Fig. 6, the source of the switching device Q1 is connected to, for example, a current sensor 25 which utilizes a Hall device and outputs a voltage proportional to the magnitude of a current. Also this configuration allows the current-voltage characteristic of a DC-DC converter to have a slope as in the first and second embodiments.

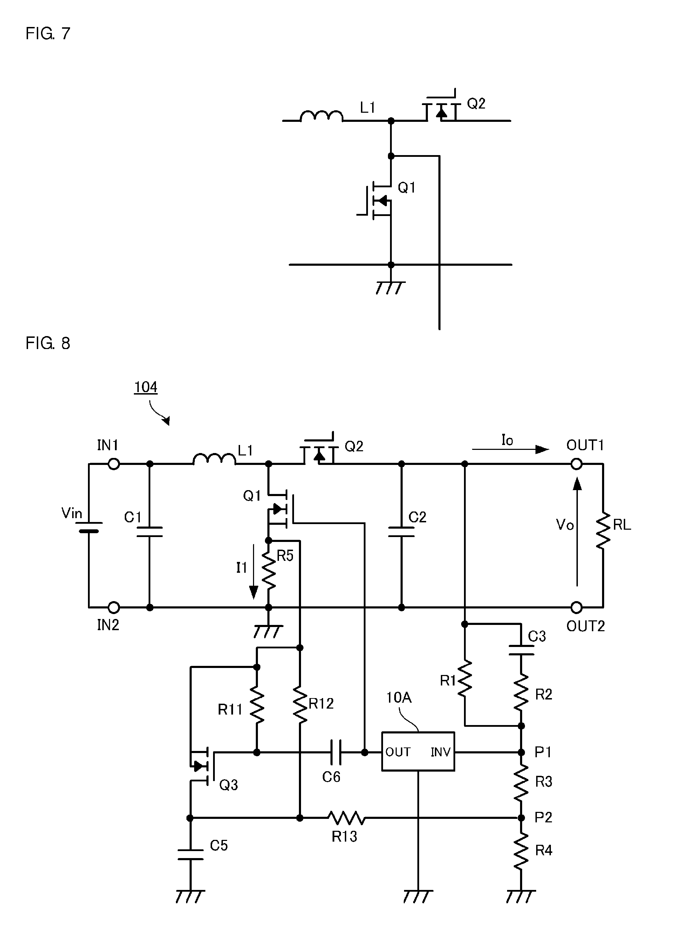

Fig. 7 illustrates a circuit configuration in which the on-resistance of the switching device Q1 is utilized. In this example, the drain of the switching device Q1 is connected to the resistor R6 illustrated in Fig. 1 or the diode D1 illustrated in Fig. 4. When the switching device Q1 is on, a current is detected by utilizing the on-resistance of the switching device Q1. Also this configuration allows the current-voltage characteristic of a DC-DC converter to have a slope as in the first and second embodiments.

### (Fourth embodiment)

Fig. 8 illustrates the circuit diagram of a DC-DC converter 104 according to a fourth embodiment. The DC-DC converter 104 according to the fourth embodiment is different from that of the first embodiment in terms of a detection circuit for detecting a current voltage that flows when the switching device Q1 is on.

The source of the switching device Q1 is connected to a capacitor C5 with a switching device Q3 interposed therebetween. The source of the switching device Q1 is also connected to the gate of the switching device Q3 with a resistor R11 interposed therebetween. Further, the source of the switching device Q1 is connected to the capacitor C5 with a resistor R12 interposed therebetween. The capacitor C5 is connected to the connection node P2 with a voltage divider resistor R13 interposed therebetween.

The gate of the switching device Q1 is connected to an OUT terminal of a switching control circuit 10A. The switching control circuit 10A is a circuit formed of the driving circuit 10, the error amplifier 11, and the comparator 12 described in the first embodiment. The OUT terminal of the switching control circuit 10A corresponds to the output terminal of the comparator 12. The OUT terminal of the switching control circuit 10A is connected to the gate of the switching device Q3 with a capacitor C6 interposed therebetween. In other words, although the switching devices Q1 and Q3 are both switched on as a result of the same gate signal being input from the switching control circuit 10A, the switching device Q3 is switched on slightly earlier than the switching device Q1, since the capacitor C6 is provided.

The INV terminal of the switching control circuit 10A, which corresponds to the non-inverting input terminal (+) of the error amplifier, is connected to the connection node P1. Note that, although not illustrated, the switching control circuit 10A is also connected to the gate terminal of the switching device Q2 and performs switching control of the switching device Q2.

In this configuration, when the switching control circuit 10A switches on the switching devices Q1 and Q3, the switching device Q3 is switched on before the switching device Q1, as described above. When the switching device Q1 is switched on, the potential of one end of the resistor R5 on the switching device Q1 side becomes (+), a current flows from the switching device Q1 to the switching device Q3 and then to the capacitor C5, whereby the capacitor C5 is charged.

When the capacitor C5 is charged, the voltage of the capacitor C5 after charging is superimposed on the detection voltage determined by the resistors R1, R3, and R4, and the resultant voltage is input to the INV terminal of the switching control circuit 10A. Then similarly to the first embodiment, in the switching control circuit 10A, when a voltage input to the INV terminal increases, the duty cycle of the PWM modulation signal output from the OUT terminal decreases. As a result, the output voltage Vo decreases and the current-voltage characteristic has a slope, as illustrated in Fig. 2.

Note that the resistor R11 is an element for discharging a capacitor between the gate and source of the switching device Q3. The resistor R12 is an element for discharging the capacitor C5.

As described above, in the fourth embodiment, a voltage which is the detection voltage determined by the resistors R1, R3, and R4 on which the voltage across the charged capacitor C5 has been superimposed is input to the switching control circuit 10A. In other words, since the peak value of the output voltage at the time when the switching device Q1 is on is superimposed on the output voltage Vo, the current-voltage characteristic having a large slope can be generated.

### (Fifth embodiment)

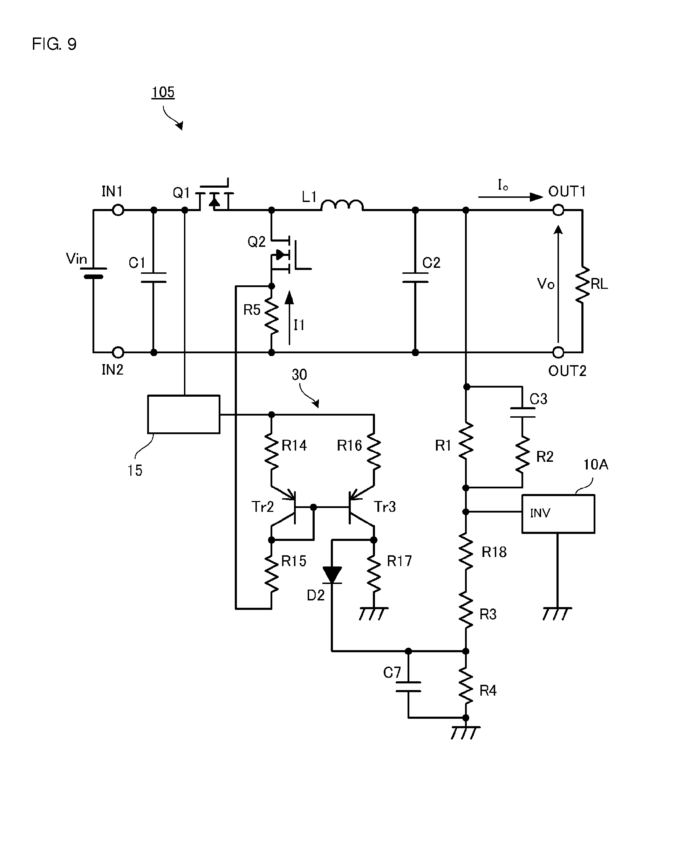

Fig. 9 is the circuit diagram of a DC-DC converter 105 according to a fifth embodiment. In the fifth embodiment, an example of a step-down DC-DC converter will be described.

The input capacitor C1 is connected between the input terminals IN1 and IN2. The switching device Q1 and the inductor L1 are connected in series between the input terminal IN1 and the output terminal OUT1. The smoothing capacitor C2 is connected to one end of the inductor L1 on the output terminal OUT1 side, and the switching device Q2 and the resistor R5 are connected in series to the other end of the inductor L1.

A regulator circuit 15 is connected to the input terminal IN1. A current mirror circuit 30 is connected to the regulator circuit 15. The current mirror circuit 30 is formed of a series circuit formed of a resistor R14, a transistor Tr2, and a resistor R15 and a series circuit formed of a resistor R16, a transistor Tr3, and a resistor R17. The collector of the transistor Tr3 is connected to a diode D2, and a parallel circuit formed of the resistor R4 and a capacitor C7 is connected to the diode D2.

A resistor R18 is connected between the resistors R1 and R3. A connection node between the resistors R1 and R18 is connected to the INV terminal of the switching control circuit 10A. Although not illustrated, the switching control circuit 10A is connected to the gates of the switching devices Q1 and Q2, and performs switching control of them.

In this configuration, when the switching device Q2 is on, a current flows through the resistor R5, and a voltage drop is generated across the resistor R5. At this time the potential of one end of the resistor R5 on the switching device Q2 side becomes (-). Hence, the potential of the base of the transistor Tr2 decreases through the resistor R15, whereby a current flows from the emitter to the collector of the transistor Tr2. As a result, a current flows from the regulator circuit 15 to the switching device Q2 through a resistor R14, the transistor Tr2, and the resistor R15.

Similarly, the potential of the base of the transistor Tr3 decreases and a current flows from the emitter to the collector of the transistor Tr3. As a result, a current flows from the regulator circuit 15 through the resistor R16, the transistor Tr3, and the resistor R17. Hence, a voltage drop is generated across the resistor R17, and the transistor Tr3 side of the resistor R17 becomes (+), whereby a current flows through the diode D2. This current charges a capacitor C7 to a peak voltage and the voltage is applied between the two ends of the resistor R4.

In other words, a voltage which is the detection voltage determined by the resistors R1, R18, R3, and R4 on which the output voltage output from the current mirror circuit 30 has been superimposed is input to the INV terminal of the switching control circuit 10A. In other words, similarly to the first embodiment, when the input voltage input to the INV terminal increases, the duty cycle of a PWM modulation signal output from the OUT terminal decreases. As a result, the output voltage Vo decreases and the current-voltage characteristic is made to have a slope, as illustrated in Fig. 2.

In the fifth embodiment, even when a current flowing through the resistor R5 is low, the current can be amplified by the current mirror circuit 30. Hence a current-voltage characteristic having a slope can be generated with high accuracy.

### (Sixth embodiment)

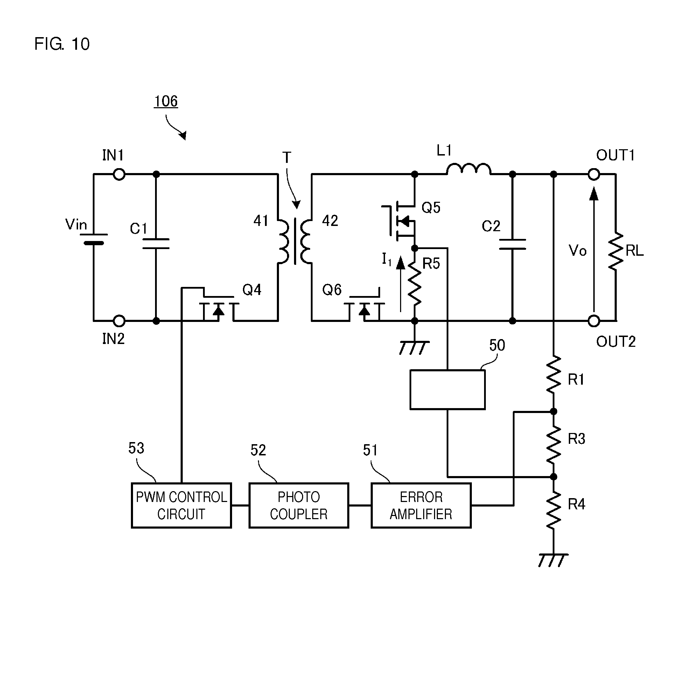

Fig. 10 is the circuit diagram of a DC-DC converter 106 according to a sixth embodiment. The DC-DC converter 106 according to the sixth embodiment is an isolated converter.

The input capacitor C1 is connected between the input terminals IN1 and IN2. A primary winding 41 of a transformer T and a switching device Q4 are connected in series between the input terminals IN1 and IN2. A switching device Q5, the resistor R5, and a switching device Q6 are connected in series between the two ends of a secondary winding 42 of the transformer T. One end of the secondary winding 42 of the transformer T is connected to the output terminal OUT1 with the inductor L1 interposed therebetween. The smoothing capacitor C2 is connected to one end of the inductor L1 on the output terminal OUT1 side.

The voltage divider resistors R1, R3, and R4 are connected between the output terminals OUT1 and OUT2. A connection node between the resistors R1 and R3 is connected to the input of an error amplifier 51. A PWM control circuit 53 receives the output of the error amplifier 51 through a photo coupler 52, and the feedback control of the switching device Q4 is performed on the basis of this signal.

One end of the resistor R5 on the switching device Q5 side is connected to a connection node between the voltage divider resistors R3 and R4 with a current-voltage characteristic generation circuit 50 interposed therebetween. The current-voltage characteristic generation circuit 50 may be any one of circuits generating a current-voltage characteristic having a slope described in the first to fifth embodiments.

With this configuration, a current-voltage characteristic having a slope is generated by switching control of the switching devices Q5 and Q6 on the secondary side of the transformer T. The operation thereof, which is the same as that of the first to fifth embodiments, is omitted.

Note that in the case (case of Fig. 10) of a circuit configuration in which the potential of one end of the resistor R5 on the switching device Q5 is (-), the current-voltage characteristic generation circuit 50 preferably has the circuit configuration illustrated in the DC-DC converter 105 according to the fifth embodiment. In the case of a circuit configuration in which the potential of the one end of the resistor R5 on the switching device Q5 is (+), the current-voltage characteristic generation circuit 50 preferably has one of the circuit configurations illustrated in the DC-DC converters according to the first to fourth embodiments.

### (Seventh embodiment)

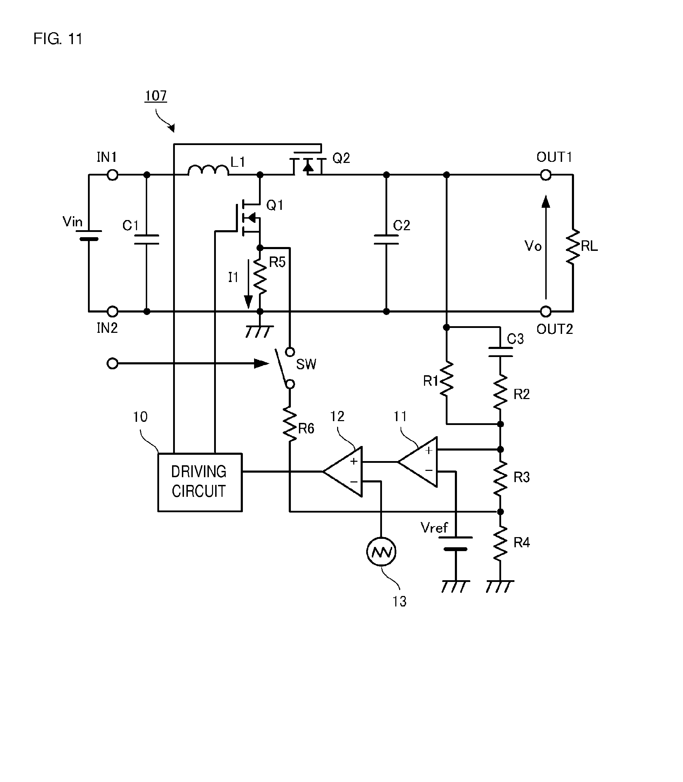

Fig. 11 is a circuit diagram of a DC-DC converter 107 according to a seventh embodiment. The DC-DC converter 107 according to the seventh embodiment has a configuration in which a switching device SW is connected between the resistors R5 and R6, in addition to the configuration of the DC-DC converter 101 according to the first embodiment. In this example, the switching device SW can be switched on or off in accordance with whether or not a current-voltage characteristic having a slope is to be generated. As a result, when the DC-DC converter 107 is used as a standalone unit rather than used in a parallel-driving mode, a useless operation is prevented, whereby the output voltage can be stabilized. Note that the switching device SW may be a mechanical switch or may be an electronic switch. The switching device SW may be switched on and off by the control IC of the DC-DC converter 107 or may be switched on and off using the driving circuit 10.

### Reference Signs List

- 10: driving circuit
- 11: error amplifier (reference voltage control circuit)
- 12: comparator (PWM modulation circuit)
- 13: triangular-wave oscillator
- 101, 102, 104, 105, 106, 107: DC-DC converters
- C1: input capacitor
- C2: smoothing capacitor
- C3: capacitor
- L1: inductor
- Q1, Q2, Q3: switching devices
- R1, R3, R4, R6: voltage divider resistors (resistor voltage divider circuit)
- R2: resistor
- R5: resistor for current detection (switching current detection circuit)
- RL: load
- Vin: DC power supply
- Vref: reference voltage
- IN1, IN2: input terminals (DC power supply input unit)
- OUT1, OUT2: output terminals

## Claims

1. A DC-DC converter that includes: a switching circuit that performs switching of a voltage and current input to a DC power supply input unit; a smoothing circuit that smoothes the voltage and current switched by the switching circuit; and a switching control circuit that performs feedback control of the switching circuit on a basis of a comparison between an output voltage output from the smoothing circuit and a reference voltage in such a manner that the output voltage output from the smoothing circuit is stabilized, the DC-DC converter comprising:
a switching current detection circuit that detects a change in a current flowing through the switching circuit as a change in voltage; and
an output voltage detection signal control circuit that changes the output voltage output from the smoothing circuit by superimposing an output voltage of the switching current detection circuit on the output voltage output from the smoothing circuit.

2. The DC-DC converter according to Claim 1, wherein the output voltage detection signal control circuit includes:
a capacitor that charges the output voltage of the switching current detection circuit; and
a switching device that switches on and off charging of the capacitor in synchronization with on and off operations of the switching circuit.

3. A DC-DC converter that includes: a switching circuit that performs switching of a voltage and current input to a DC power supply input unit; a smoothing circuit that smoothes the voltage and current switched by the switching circuit; and a switching control circuit that performs feedback control of the switching circuit on a basis of a comparison between an output voltage output from the smoothing circuit and a reference voltage in such a manner that the output voltage output from the smoothing circuit is stabilized,
wherein the switching control circuit includes: an error amplifier that amplifies an error between the output voltage output from the smoothing circuit and the reference voltage; and a PWM modulation circuit that generates a PWM modulation signal on a basis of an output of the error amplifier and a triangular wave signal, and
wherein the DC-DC converter comprises:
a switching current detection circuit that detects a change in a current flowing through the switching circuit as a change in voltage; and
a reference voltage control circuit that controls the reference voltage by using an output voltage of the switching current detection circuit.

4. The DC-DC converter according to Claim 1 or 2,
wherein the switching current detection circuit includes a current mirror circuit that detects the current flowing through the switching circuit, and
wherein the output voltage detection signal control circuit includes a resistor voltage divider circuit that divides the output voltage output from the smoothing circuit and superimposes an output side current of the current mirror circuit.

5. The DC-DC converter according to any one of Claims 1 to 4, further comprising:
an isolated transformer including a primary winding and a secondary winding,
wherein the primary winding is connected to a switching device that performs switching of a current flowing through the primary winding, and the secondary winding is connected to a synchronous switching device that performs synchronous rectification for a voltage and current induced in the secondary winding, and
wherein the switching current detection circuit detects a current flowing through the switching device.

6. The DC-DC converter according to any one of Claims 1 to 5, further comprising a switching device provided in an output unit of the switching current detection circuit.
